(19) Europäisches Patentamt
European Patent Office
Office européen des brevets

(11) EP 0 651 019 B1

(12) **EUROPÄISCHE PATENTSCHRIFT**

(45) Veröffentlichungstag und Bekanntmachung des Hinweises auf die Patenterteilung:
**05.06.1996 Patentblatt 1996/23**

(51) Int Cl.[6]: **C08L 83/04**

(21) Anmeldenummer: **94117006.0**

(22) Anmeldetag: **27.10.1994**

(54) **Vernetzbare Siloxan-Zusammensetzungen und deren Verwendung zur Herstellung von klebrige Stoffe abweisenden Überzügen**

Curable siloxane compositions and release coatings

Compositions de siloxane reticulable et revêtements anti-adhésifs

(84) Benannte Vertragsstaaten:
**AT BE CH DE ES FR GB IT LI NL SE**

(30) Priorität: **27.10.1993 DE 4336703**

(43) Veröffentlichungstag der Anmeldung:
**03.05.1995 Patentblatt 1995/18**

(73) Patentinhaber: **Wacker-Chemie GmbH**
**D-81737 München (DE)**

(72) Erfinder:
- **Herzig, Christian, Dr.**
  **D-83373 Taching am See (DE)**
- **Deubzer, Bernward, Dr.**
  **D-84489 Burghausen (DE)**
- **Seeger-Feichtinger, Inge**
  **D-94166 Stubenberg (DE)**
- **Hockemeyer, Friedrich**
  **D-84553 Marktl (DE)**

(56) Entgegenhaltungen:
**EP-A- 0 446 030** **EP-A- 0 605 227**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft vernetzbare Zusammensetzungen, die Alkenylgruppen aufweisende polymere Organosiliciumverbindung, Si-gebundene Wasserstoffatome aufweisende polymere Organosiliciumverbindungen und Katalysator enthalten, sowie deren Verwendung zur Herstellung von klebrige Stoffe abweisenden Überzügen.

Unter dem Begriff "polymere Organosiliciumverbindungen" sollen im Rahmen dieser Erfindung sowohl polymere als auch oligomere Organosiliciumverbindungen verstanden werden. Gleichermaßen soll der Begriff "Organopolysiloxane" auch oligomere Siloxane mitumfassen.

Aus US-A 4,609,574 (ausgegeben 2. September 1986, Dow Corning Corporation) sind vernetzbare Zusammensetzungen zur Herstellung von Klebstoff abweisenden Überzügen bekannt, die alkenylfunktionelles Organopolysiloxan mit maximal 10 % aller organischer Reste gleich Alkenylgruppen und Methylhydrogenpolysiloxan mit mindestens 3 Si-gebundenen Wasserstoffatome pro Molekül enthalten, wobei das Verhältnis von Si-gebundenen Wasserstoffatomen zu den Alkenylgruppen 0,8 bis 1,5 beträgt. In EP 523 660 A1 (ausgegeben am 20. Januar 1993, Wacker-Chemie GmbH) bzw. der entsprechenden US-A 5,241,034 werden Zusammensetzungen aus Alkenylorganosiliciumverbindungen, Hydrogensiloxanvernetzer, Katalysator sowie gegebenenfalls Inhibitor beschrieben, wobei das Verhältnis von Si-gebundenem Wasserstoff zu Alkenylgruppen bevorzugt 1 bis 3 beträgt. In US 5,145,932 (ausgegeben am 8. September 1992; Toray Silicone Co., Ltd.) werden Zubereitungen offenbart, die Alkenylorganopolysiloxan mit mindestens zwei Alkenylgruppen pro Molekül, Hydrogenorganosiloxanvernetzer mit mindestens zwei SiH-Gruppen, Katalysator und Inhibitor sowie Organopolysiloxane, die weder Si-gebundenen Wasserstoff noch Alkenylgruppen enthalten. In EP 444 960 A2 (ausgegeben am 4. September 1991; Shin-Etsu Chemical Co., Ltd.) werden additionsvernetzende Organopolysiloxanmassen beschrieben, die ein vinylgruppenhaltiges Organopolysiloxan mit Si-gebundenen Wasserstoffatomen, ein Organohydrogensiloxan sowie einen Katalysator enthalten. In J. of Applied Polymer Sci. 47, 2257 (1993) Stein et al. werden Zusammensetzungen aus Vinylsiloxan, Hydrogensiloxan, Platinkatalysator und Inhibitor auf Beschaffenheit des nach Aushärtung erhaltenen Netzwerks untersucht, wobei darauf hingewiesen wird, daß zur Erhöhung der Aushärtegeschwindigkeit zwar ein SiH-Überschuß nötig ist, dieser jedoch andererseits im Netzwerk störend wirkt und durch Nachhärtungseffekte die physikalischen Eigenschaften der Beschichtung verändert.

Gegenstand der Erfindung sind Zusammensetzungen, die

(A) polymere Organosiliciumverbindung mit pro Molekül 1 bis 6 Si-gebundenen Wasserstoffatomen, wobei diese Si-gebundenen Wasserstoffatome einen Anteil von 0,001 bis 0,100 Gewichtsprozent, bezogen auf das Gesamtgewicht der Organosiliciumverbindung (A), haben,

(B) polymere Organosiliciumverbindung mit pro Molekül mindestens drei Gruppen $R^2$ der Formel

$$-R-(CH=CH_2)_{x-1}$$

mit R gleich zweiwertigem, dreiwertigem oder vierwertigem Kohlenwasserstoffrest mit 1 bis 12 Kohlenstoffatomen, die gegebenenfalls durch 1 bis 4 Sauerstoffatome durchbrochen sein können, und
x gleich der Wertigkeit von Rest R entsprechend 2, 3 oder 4,
wobei die Viskosität der Organosiliciumverbindung (B) bei 25°C maximal 200 $mm^2/s$ beträgt,

(C) polymere Organosiliciumverbindung mit pro Molekül durchschnittlich mindestens 10 Si-gebundenen Wasserstoffatomen, wobei diese Si-gebundenen Wasserstoffatome einen Anteil von 0,4 bis 1,7 Gewichtsprozent, bezogen auf das Gesamtgewicht der Organosiliciumverbindung (C), haben,

(D) die Anlagerung von Si-gebundenem Wasserstoff an aliphatische Doppelbindung fördernder Katalysator

sowie gegebenenfalls

(E) Inhibitor

enthalten, mit der Maßgabe, daß

- in der Zusammensetzung das Molverhältnis der gesamten Si-gebundenen Wasserstoffatome zu den gesamten Alkenylgruppen $-CH=CH_2$ durchschnittlich kleiner 1, bevorzugt kleiner 0,9, ist,
- die Zusammensetzung Organosiliciumverbindung (B) in einer solchen Menge enthält, daß die Zusammensetzung pro Si-gebundenem Wasserstoffatom der Komponente (A) durchschnittlich mindestens 1,1, besonders bevorzugt mindestens 1,3, Alkenylreste $-CH=CH_2$ der Komponente (B) enthält
- und der Anteil der Si-gebundenen Wasserstoffatome der Organosiliciumverbindung (C) 5 bis 50 %, bezogen auf die Anzahl der gesamten in der Zusammensetzung vorhandenen Si-gebundenen Wasserstoffatome, beträgt.

Vorzugsweise enthalten die erfindungsgemäß eingesetzten Organosilicumverbindungen (A) pro Molekül durchschnittlich 1,5 bis 3,0 Si-gebundene Wasserstoffatome.

Die erfindungsgemäß eingesetzten Organosiliciumverbindungen (A) haben bei 25°C vorzugsweise eine Viskosität von 10 bis 200 000 $mm^2/s$, besonders bevorzugt von 50 bis 10 000 $mm^2/s$, insbesondere von 100 bis 1 000 $mm^2/s$.

Vorzugsweise handelt es sich bei den erfindungsgemäß eingesetzten Organosiliciumverbindungen (A) um solche aus Einheiten der allgemeinen Formel

$$H_eR^1_fSiO_{\frac{4-e-f}{2}} \qquad (I),$$

wobei

- $R^1$ gleich oder verschieden sein kann und SiC-gebundene, gegebenenfalls halogenierte Kohlenwasserstoffreste mit 1 bis 18 Kohlenstoffatomen bedeutet,
- e 0 oder 1, durchnittlich 0,001 bis 0,1,
- f 0, 1, 2 oder 3, durchschnittlich 1,0 bis 2,0, und die Summe e+f nicht größer als 3 ist, mit der Maßgabe, daß die Organosiliciumverbindung (A) 1 bis 6 Si-gebundene Wasserstoffatome aufweist und diese einen Anteil von 0,001 bis 0,100 Gewichtsprozent, bezogen auf das Gesamtgewicht der Organosiliciumverbindung (A), haben.

Obwohl durch Formel (I) nicht ausgedrückt und in den meisten Fällen auch nicht bevorzugt, können darüberhinaus als Komponente (A) Organosiliciumverbindungen eingesetzt werden, in denen der Siloxansauerstoff zwischen zwei Siliciumatomen ganz oder teilweise durch zweiwertige Kohlenwasserstoffreste mit 2 bis 20 Kohlenstoffatomen, die durch ein oder mehrere Sauerstoffatome unterbrochen sein können, ersetzt ist, oder in denen der Siloxansauerstoff ganz oder teilweise fehlt, wodurch Oligo- oder Polysilanstrukturen entstehen.

Beispiele für Reste $R^1$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest, Decylreste, wie der n-Decylrest; Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste und Aralkylreste, wie der Benzylrest, der $\alpha$- und der $\beta$-Phenylethylrest.

Beispiele für halogenierte Reste $R^1$ sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m-, und p-Chlorphenylrest.

Bevorzugt handelt es sich bei Rest $R^1$ um Alkylreste mit 1 bis 4 Kohlenstoffatomen, insbesondere um den Methylrest.

Bei den Organosiliciumverbindungen (A) aus Einheiten der allgemeinen Formel (I) handelt es sich bevorzugt um Organopolysiloxane der Formel

$$H_dR^1_{3-d}SiO(SiR^1_2O)_o(SiHR^1O)_pSiR^1_{3-d}H_d \qquad (II),$$

wobei

- $R^1$ gleich oder verschieden sein kann und die oben dafür angegebene Bedeutung hat,
- d gleich oder verschieden sein kann und 0 oder 1 ist,
- o eine ganze Zahl von 10 bis 1000 ist und
- p 0 oder eine ganze Zahl von 1 bis 6 bedeutet, mit der Maßgabe, daß die Organosiliciumverbindung (A) pro Molekül 1 bis 6 Si-gebundene Wasserstoffatome aufweist und diese einen Anteil von 0,001 bis 0,100 Gewichtsprozent, bezogen auf das Gesamtgewicht der Organosiliciumverbindung (A), haben.

Im Rahmen dieser Erfindung soll Formel (II) so verstanden werden, daß o Einheiten -($SiR^1_2O$)- und p Einheiten -($SiHR^1O$)- in beliebiger Weise im Organosiloxanmolekül verteilt sein können.

Besonders bevorzugt handelt es sich bei der erfindungsgemäß eingesetzten Organosiliciumverbindung (A) um Mischpolymerisate aus Dimethylhydrogensiloxan- und Dimethylsiloxaneinheiten, Mischpolymerisate aus Dimethylsiloxan-, Dimethylhydrogensiloxan- und Trimethylsiloxaneinheiten, Mischpolymerisate aus Dimethylhydrogensiloxan-, Dimethylsiloxan- und Methylhydrogensiloxaneinheiten, Mischpolymerisate aus Trimethylsiloxan- und Methylhydrogensiloxaneinheiten und Mischpolymerisate aus Trimethylsiloxan-, Dimethylsiloxan- und Methylhydrogensiloxaneinheiten, insbesondere um Mischpolymerisate aus Dimethylhydrogensiloxan- und Dimethylsiloxaneinheiten und Mischpolymerisate aus Dimethylhydrogensiloxan-, Trimethylsiloxan- und Dimethylsiloxaneinheiten.

Bei der erfindungsgemäß eingesetzten Organosiliciumverbindung (A) kann es sich um eine Art oder mindestens zwei verschiedene Arten solcher Organosiliciumverbindungen handeln. Im allgemeinen handelt es sich bei den Organosiliciumverbindungen (A) herstellungsbedingt um Gemische, wie beispielsweise Gemische von Organopolysiloxanen mit 2 Si-gebundenen Wasserstoffatomen und Organopolysiloxanen mit nur einem Sigebundenen Wasserstoffatom.

Die erfindungsgemäß eingesetzten polymeren Organosiliciumverbindungen (A) sind kommerziell erhältlich oder nach in der Silicium-Chemie bekannten Verfahren herstellbar.

Die erfindungsgemäß eingesetzten Organosiliciumverbindungen (B) weisen pro Molekül vorzugsweise mindestens 3 Alkenylgruppen $-CH=CH_2$ auf.

Der Anteil der Gruppen $R^2$ der Formel $-R-(CH=CH_2)_{x-1}$ mit R und x gleich der obengenannten Bedeutung in der Organosiliciumverbindung (B) liegt vorzugsweise bei mehr als 10 %, besonders bevorzugt zwischen 10 und 50 %, bezogen auf die Anzahl aller SiC-gebundenen Reste.

Die erfindungsgemäß eingesetzte Organosiliciumverbindung (B) hat bevorzugt eine Viskosität von höchstens 100 $mm^2/s$ bei 25°C, insbesondere höchstens 25 $mm^2/s$.

Vorzugsweise handelt es sich bei den erfindungsgemäß eingesetzten Organosiliciumverbindungen (B) um Organosiliciumverbindungen gemäß der eingangs zitierten EP 523 660 A1 sowie um solche aus Einheiten der Formel

$$R^2{}_aR^3{}_{3-a}SiO_{1/2} \qquad (III)$$

und

$$R^2{}_bR^3{}_{2-b}SiO_{2/2} \qquad (IV),$$

wobei

- $R^2$ gleich oder verschieden sein kann und SiC-gebundene Reste der Formel $-R-(CH=CH_2)_{x-1}$ mit R und x gleich der obengenannten Bedeutung darstellt,
- $R^3$ gleich oder verschieden sein kann und aliphatisch gesättigte, gegebenenfalls substituierte, SiC-gebundene Kohlenwasserstoffreste mit 1 bis 6 Kohlenstoffatomen bedeutet,
- a 0, 1, 2 oder 3, bevorzugt 0 oder 1, ist und
- b 0, 1 oder 2, bevorzugt 1, ist,

mit der Maßgabe, daß diese Verbindungen pro Molekül mindestens 2 Reste $R^2$ aufweisen und die Organosiliciumverbindungen eine Viskosität bei 25°C von höchstens 200 $mm^2/s$ haben.

Des weiteren kann es sich bei den erfindungsgemäß eingesetzten Organosiliciumverbindungen (B) um cyclische Produkte handeln, wobei in diesem Fall Umsetzungsprodukte aus $(HCH_3SiO)_3$ und/oder $(HCH_3SiO)_4$ mit $\alpha,\omega$-Dienen, wie beispielsweise

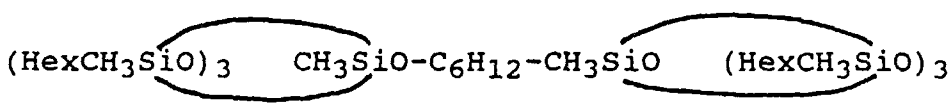

mit Hex gleich dem 5-Hexenylrest, bevorzugt sind.

Organosiliciumverbindung (B) wird vorzugsweise so gewählt, daß bei der erfindungsgemäß einzusetzenden Menge von (B) bezogen auf (A) Mischbarkeit zwischen diesen beiden Komponenten besteht.

Beispiele für Reste R sind zweiwertige Kohlenwasserstoffreste mit 1 bis 12 Kohlenstoffatomen, wie der Methylen-, 1,4-Butylen-, 1,6-Hexylen-, 1,8-Octylen- und der 1,12-Dodecylenrest, dreiwertige Kohlenwasserstoffreste mit 1 bis 12 Kohlenstoffatomen, wie

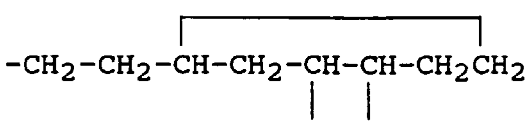,
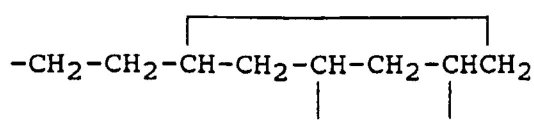

und 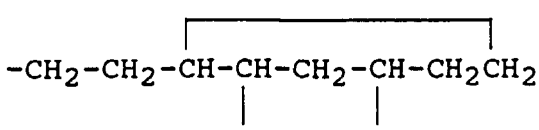,

sowie vierwertige Kohlenwasserstoffreste mit 1 bis 12 Kohlenstoffatomen, wie

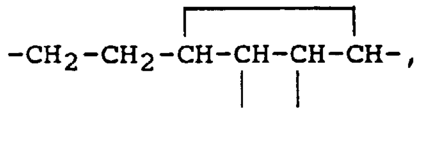, 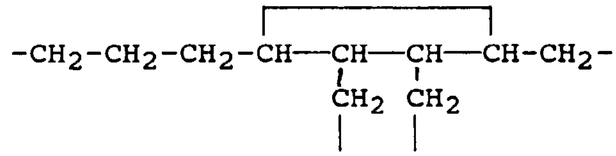

und 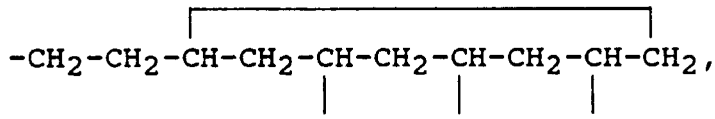,

wobei zweiwertige und dreiwertige Kohlenwasserstoffreste mit 1 bis 12 Kohlenstoffatomen bevorzugt sind.

Bevorzugt handelt es sich bei $R^2$ um Reste der Formel $-R-CH=CH_2$ mit R gleich dem obengenannten zweiwertigen Kohlenwasserstoffrest, wie z.B. den Allyl-, 5-Hexenyl-, 7-Octenyl-, 9-Decenyl- und den 13-Tetradecenylrest, sowie um Reste der Formel $-R-(CH=CH_2)_2$ mit R gleich dem obengenannten dreiwertigen Kohlenwasserstoffrest, wie z.B den 2-(3,4-Divinylcyclohexyl)ethyl-, den 2-(3,5-Divinylcyclohexyl)ethyl- oder den 2-(2,4-Divinylcyclohexyl)ethylrest, wobei Reste der Formel $-R-CH=CH_2$ mit R gleich dem obengenannten zweiwertigen Kohlenwasserstoffrest, insbesondere der 5-Hexenylrest, besonders bevorzugt sind.

Beispiele für Rest $R^3$ sind der Methyl-, Ethyl-, Propyl-, Butyl- und der Hexylrest, wobei der Methylrest bevorzugt ist.

Beispiele für die erfindungsgemäß eingesetzten Organosiliciumverbindungen (B) sind Mischpolymerisate aus Trimethylsiloxan- und 5-Hexenylmethylsiloxaneinheiten, Mischpolymerisate aus Trimethylsiloxan-, Dimethylsiloxan- und 5-Hexenylmethylsiloxaneinheiten, Mischpolymerisate aus 5-Hexenyldimethylsiloxan- und 5-Hexenylmethylsiloxaneinheiten, Mischpolymerisate aus Trimethylsiloxan- und Allylmethylsiloxaneinheiten, Mischpolymerisate aus Trimethylsiloxan- und 9-Decenylmethylsiloxaneinheiten, Mischpolymerisate aus Trimethylsiloxan-, 5-Hexenylmethylsiloxan- und 1,6-(Methylsiloxanyl)hexaneinheiten sowie durch Hydrosilylierung hergestellte Produkte aus 1,1,3,3-Tetramethyldisiloxan und 1,2,4-Trivinylcyclohexan oder/und 1,3,5-Trivinylcyclohexan.

Besonders bevorzugt handelt es sich bei den erfindungsgemäß eingesetzten Organosiliciumverbindungen (B) um 5-Hexenyloligosiloxane mit einer Viskosität von 10 bis 25 $mm^2/s$ bei 25°C, die aus 5-Hexenylmethylsiloxan- und Trimethylsiloxaneinheiten bestehen, sowie Copolymere aus derartigen Oligosiloxanen und Kohlenwasserstoffblöcken nach der eingangs zitierten EP 523 660 A1, wobei mindestens ein Kohlenwasserstoffblock mindestens zwei Siloxanblöcke verbindet, mit der Maßgabe, daß alle genannten Organosiliciumverbindungen pro Molekül mindestens 2 Reste $R^2$ aufweisen, wobei die Anzahl der Reste $R^2$ in der Organosiliciumverbindung mehr als 10 % aller SiC-gebundenen Reste beträgt, und die Organosiliciumverbindungen eine Viskosität bei 25°C von höchstens 200 $mm^2/s$ haben.

Die erfindungsgemäßen Zusammensetzungen enthalten Komponente (B) in Mengen von vorzugsweise 1 bis 25 Gewichtsteilen, je 100 Gewichtsteile eingesetzter Organosiliciumverbindung (A).

Die erfindungsgemäß eingesetzten polymeren Organosiliciumverbindungen (B) sind kommerziell erhältlich oder nach in der Silicium-Chemie bekannten Verfahren herstellbar.

Vorzugsweise enthalten die erfindungsgemäß eingesetzten Organopolysiloxane (C) pro Molekül durchschnittlich mindestens 20 Si-gebundene Wasserstoffatome, besonders bevorzugt 20 bis 40 Si-gebundene Wasserstoffatome.

Der Anteil der Si-gebundenen Wasserstoffatome in der Organosiliciumverbindung (C) beträgt bevorzugt 1,0 bis 1,7 Gewichtsprozent, bezogen auf das Gesamtgewicht der Organosiliciumverbindung (C).

Die erfindungsgemäß eingesetzten Organosiliciumverbindungen (C) haben bei 25°C vorzugsweise eine Viskosität von 5 bis 100 $mm^2/s$, besonders bevorzugt von 15 bis 30 $mm^2/s$.

Vorzugsweise handelt es sich bei der erfindungsgemäß eingesetzten Organosiliciumverbindung (C) um solche aus Einheiten der allgemeinen Formel

$$H_gR^4_hSiO_{\frac{4-g-h}{2}} \qquad (V),$$

wobei

- $R^4$ gleich oder verschieden sein kann und eine für $R^1$ angegebene Bedeutung hat,
- g 0 oder 1, durchnittlich 0,2 bis 1,0,
- h 0, 1, 2 oder 3, durchschnittlich 1,0 bis 1,8, und

die Summe g+h nicht größer als 3 ist, mit der Maßgabe, daß die Organosiliciumverbindung (C) mindestens 10 Si-gebundene Wasserstoffatome aufweist und diese einen Anteil von 0,4 bis 1,7 Gewichtsprozent, bezogen auf das Gesamtgewicht der Organosiliciumverbindung (C), haben.

Obwohl durch Formel (V) nicht ausgedrückt und in den meisten Fällen auch nicht bevorzugt, können darüberhinaus als Komponente (C) Organosiliciumverbindungen eingesetzt werden, in denen der Siloxansauerstoff zwischen zwei Siliciumatomen ganz oder teilweise durch zweiwertige Kohlenwasserstoffreste mit 2 bis 20 Kohlenstoffatomen, die durch ein oder mehrere Sauerstoffatome unterbrochen sein können, ersetzt ist, oder in denen der Siloxansauerstoff ganz oder teilweise fehlt, wodurch Oligo- oder Polysilanstrukturen entstehen.

Beispiele für Reste $R^4$ sind die für Rest $R^1$ angegebenen Beispiele.

Bevorzugt handelt es sich bei Rest $R^4$ um den Methylrest.

Bei den Organosiliciumverbindungen (C) der allgemeinen Formel (V) handelt es sich bevorzugt um Organopolysiloxane der Formel

$$H_iR^4{}_{3-i}SiO(SiR^4{}_2O)_k(SiHR^4O)_lSiR^4{}_{3-i}H_i \qquad (VI),$$

wobei

$R^4$ gleich oder verschieden sein kann und die oben dafür angegebene Bedeutung hat,
i gleich oder verschieden sein kann und 0 oder 1 ist,
k 0 oder eine ganze Zahl von 1 bis 50 ist und
l eine ganze Zahl von 10 bis 60 bedeutet, wobei die Summe aus k und l nicht größer als 70 ist.

Im Rahmen dieser Erfindung soll Formel (VI) so verstanden werden, daß k Einheiten $-(SiR^4{}_2O)-$ und l Einheiten $-(SiHR^4O)-$ in beliebiger Weise im Organosiloxanmolekül verteilt sein können.

Besonders bevorzugt handelt es sich bei der erfindungsgemäß eingesetzten Organosiliciumverbindung (C) um Mischpolymerisate aus Dimethylhydrogensiloxan-, Dimethylsiloxan- und Methylhydrogensiloxaneinheiten, Mischpolymerisate aus Trimethylsiloxan- und Methylhydrogensiloxaneinheiten und Mischpolymerisate aus Trimethylsiloxan-, Dimethylsiloxan- und Methylhydrogensiloxaneinheiten, insbesondere um Mischpolymerisate aus Trimethylsiloxan- und Methylhydrogensiloxaneinheiten.

Bei der erfindungsgemäß eingesetzten Organosiliciumverbindung (C) kann es sich um eine Art oder mindestens zwei verschiedenen Arten solcher Organosiliciumverbindungen handeln.

Die erfindungsgemäß eingesetzten polymeren Organosiliciumverbindungen (C) sind kommerziell erhältlich oder nach in der Silicium-Chemie bekannten Verfahren herstellbar.

Die erfindungsgemäßen Zusammensetzungen enthalten Organosiliciumverbindung (C) in Mengen von vorzugsweise 0,05 bis 5 Gewichtsteilen, je 100 Gewichtsteile eingesetzter Organosiliciumverbindung (A).

Bei den erfindungsgemäß eingesetzten, die Anlagerung von Si-gebundenem Wasserstoff an aliphatische Doppelbindung fördernden Katalysatoren (D) kann es sich um die gleichen Katalysatoren handeln, die auch bisher zur Förderung der Anlagerung von Si-gebundenem Wasserstoff an aliphatische Doppelbindung eingesetzt werden konnten. Bei den erfindungsgemäß eingesetzten Katalysatoren (D) handelt es sich vorzugsweise um ein Metall aus der Gruppe der Platinmetalle oder um eine Verbindung oder einen Komplex aus der Gruppe der Platinmetalle.

Beispiele für Katalysatoren (D) sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6 \cdot 6H_2O$, $Na_2PtCl_4 \cdot 4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-($\gamma$-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, $\gamma$-Picolin-Platindichlorid, Cyclopentadien-Platindichlorid sowie Umsetzungsprodukte von Platintetrachlorid mit Olefin und primärem Amin oder sekundärem Amin oder primärem und sekundärem Amin gemäß US-A-4 292 434, wie das Umsetzungsprodukt aus in 1-Octen gelöstem Platintetrachlorid mit sec.-Butylamin, oder Ammonium-Platinkomplexe gemäß EP-B 110 370.

Katalysator (D) wird vorzugsweise in Mengen von 5 bis 500 Gewichts-ppm (Gewichtsteilen je Million Gewichtsteilen), insbesondere 10 bis 200 Gewichts-ppm, jeweils berechnet als elementares Platinmetall und bezogen auf das Gesamtgewicht der Mischung aus (A), (B) und (C).

Zusätzlich zu den Bestandteilen (A), (B), (C) und (D) können die erfindungsgemäßen Zusammensetzungen die Anlagerung von Si-gebundenem Wasserstoff an aliphatische Doppelbindung bei Raumtemperatur verzögernde Mittel, sogenannte Inhibitoren, (E) enthalten.

Insbesondere zur Erzielung von Topfzeiten von circa 0,1 bis 100 Stunden ist ein Zusatz von Inhibitor (E) vorteilhaft.

Als Inhibitoren (E) können bei den erfindungsgemäßen Zusammensetzungen alle Inhibitoren verwendet werden, die auch bisher für den gleichen Zweck verwendet werden konnten. Beispiele für Inhibitoren (E) sind 1,3-Divinyl-1,1,3,3-tetramethyldisiloxan, Benzotriazol, Dialkylformamide, Alkylthioharnstoffe, Methylethylketoxim, organische oder

siliciumorganische Verbindungen mit einem Siedepunkt von mindestens 25°C bei 1012 mbar (abs.) und mindestens einer aliphatischen Dreifachbindung gemäß US-A 3,445,420, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, Inhibitoren gemäß US-A 2,476,166, wie eine Mischung aus Diallylmaleinat und Vinylacetat, Inhibitoren gemäß US 4,504,645, wie Maleinsäuremonoester, Inhibitoren gemäß US-A 4,670,531, wie Azodicarbonsäureester, Inhibitoren gemäß EP-A 186 439, wie Dialkylmaleinate, Inhibitoren gemäß US-A 5,082,871, wie Dialkylacetylendicarboxylate, und Inhibitoren gemäß US-A 4,562,096, wie Maleate und Fumarate.

Falls bei den erfindungsgemäßen Zusammensetzungen Inhibitoren (E) eingesetzt werden, handelt es sich um Mengen von 0,2 bis 5,0 Gewichtsteilen, bezogen auf 1000 Gewichtsteile einer Mischung aus (A), (B) und (C).

Des weiteren können die erfindungsgemäßen Zusammensetzungen Zusatzstoffe, wie z.B. Entschäumer, Verdikkungsmittel, Fließverbesserer, Haftvermittler und Lösungsmittel enthalten.

Die Reihenfolge beim Vermischen der Bestandteile (A), (B), (C), (D) und gegebenenfalls (E) ist zwar nicht entscheidend, für die Praxis hat es sich jedoch bewährt, Katalysator (D) dem Gemisch der anderen Bestandteile zuletzt zuzusetzen.

Die Herstellung der erfindungsgemäßen Zusammensetzungen kann vorteilhafterweise nach den im folgenden beschriebenen Arbeitsweisen erfolgen:

a) die einzelnen Bestandteile können in der Reihenfolge (A) + (C) + ggf. (E) + (B) + (D) vermischt werden,
b) falls Inhibitor (E) eingesetzt wird, kann dieser mit Bestandteil (A) oder (C) vorgemischt und anschließend die restlichen Bestandteile in der unter a) angegebenen Reihenfolge zugegeben werden,
c) Bestandteile (A), (C) und ggf. (E) werden vorgemischt und anschließend die restlichen Bestandteile in der unter a) angegebenen Reihenfolge zugegeben,
d) Bestandteile (A), (C) und ggf. (E) werden vorgemischt und anschließend kurz vor der Verwendung ein Gemisch aus Bestandteil (B) und (D) zugegeben sowie
e) falls Inhibitor (E) eingesetzt wird, kann dieser mit Bestandteilen (B) und (D) vermischt und anschließend der Mischung aus Bestandteil (A) und (C) zugegeben werden.

Die erfindungsgemäßen Zusammensetzungen eignen sich beispielsweise zum Herstellen von Trenn-, Abdeck- und Mitläuferpapieren einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck- und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunststoff, Holz oder Eisen, das bzw. die für Lagerung und/oder Transport von klebrigen Gütern, wie Klebstoffen, klebrigen Lebensmitteln, z. B. Kuchen, Honig, Bonbons und Fleisch, Bitumen, Asphalt, gefetteten Materialien und Rohgummi, bestimmt ist bzw. sind. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

Das Auftragen der erfindungsgemäßen Zusammensetzungen auf die klebrige Stoffe abweisend zu machenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Bei den klebrige Stoffe abweisend zu machenden Oberflächen, die im Rahmen der Erfindung behandelt werden können, kann es sich um Oberflächen beliebiger bei Raumtemperatur und 900 bis 1100 hPa fester Stoffe handeln. Beispiele für derartige Oberflächen sind diejenigen von Papier, Holz, Kork und Kunststoffolien, z. B. Polyethylenfolien oder Polypropylenfolien, gewebtem und ungewebtem Tuch aus natürlichen oder synthetischen Fasern oder Glasfasern, keramischen Gegenständen, Glas, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 $g/m^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die Vernetzung der erfindungsgemäßen Zusammensetzungen erfolgt vorzugsweise bei 50°C bis 150°C, besonders bevorzugt 60 bis 100°C, und einem Druck von 900 bis 1100 hPa.

Als Energiequellen für die Vernetzung durch Erwärmen werden vorzugsweise Öfen, z. B. Umlufttrockenschränke, Heizkanäle, beheizte Walzen, beheizte Platten oder Wärmestrahlen des Infrarotbereiches verwendet.

Die erfindungsgemäßen Zusammensetzungen haben den Vorteil, daß eine rasche Vernetzung schon bei niedrigen Temperaturen erzielt wird. Des weiteren haben die Zusammensetzungen den Vorteil, daß sehr abriebfeste, abhäsive Überzüge erhalten werden.

Die erfindungsgemäßen Zusammensetzungen können außer durch Erwärmen auch durch Bestrahlen mit Ultraviolettlicht oder durch Bestrahlen mit UV- und IR-Licht vernetzen gelassen werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Die erfindungsgemäßen Zusammensetzungen haben den Vorteil, daß durch das Verhältnis von Si-gebundenen Wasserstoffatomen zu Alkenylgruppen $-CH=CH_2$ von kleiner 1 unkontrollierte Nachhärtungen, die durch Reaktionen von Rest-SiH verursacht werden, verhindert werden.

Die erfindungsgemäßen Zusammensetzungen haben den Vorteil, daß schon durch Zusatz von äußerst geringen Mengen an Inhibitor (E) überraschend lange Topfzeiten erzielt werden. Als sehr vorteilhaft hat sich dabei gezeigt, daß beispielsweise eine auf eine mehrtägige Topfzeit eingestellte, erfindungsgemäße Zusammensetzung überraschend schnell aushärtet.

Des weiteren ist vorteilhaft, daß selbst mit Acrylklebern bei der Herstellung von Haftetiketten mit den erfindungsgemäßen Zusammensetzungen niedrige und stabile Trennwerte erreicht werden.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, durchgeführt.

Im folgenden beziehen sich alle Viskositätsangaben auf eine Temperatur von 25°C.

**Beispiel 1**

I) Herstellung von Alkenylsiloxan (B)

Ein kurzkettiges Equilibrat aus Trimethylsiloxy- und Hydrogenmethylsiloxyeinheiten mit der Viskosität 2 $mm^2/s$ wird zur Abtrennung von langkettigen Bestandteilen und $Si_2$- sowie $Si_3$-Fraktionen einer Vakuumdestillation unterworfen. Separat aufgefangen wird der Schnitt von ca. 60 - 160°C bei 3 hPa. Das erhaltene Siloxangemisch (H-Siloxan) hat eine Viskosität von 1,4 $mm^2/s$ bei 25°C und enthält pro kg 9,0 g Si-gebundenen Wasserstoff und entspricht im Durchschnitt der durchschnittlichen Formel $(CH_3)_3SiO-(HCH_3SiO)_{3,14}-Si(CH_3)_3$.

Verschiedene Mengen des so erhaltenen Siloxangemischs werden mit jeweils verschiedenen Mengen 1,5-Hexadien in Anwesenheit des unter II) beschriebenen Platinkatalysators umgesetzt. Die jeweils eingesetzten Mengen sowie Angaben über die erhaltenen Produkte (B1) bis (B3) sind Tabelle 1 zu entnehmen.

Tabelle 1

| | H-Siloxan [g] | Hexadien [g] | Siloxan (B) [g] | Viskosität [$mm^2/s$] | mequ C=C/100g | C=C/SiCH* |
|---|---|---|---|---|---|---|
| B1 | 44,6 | 410,0 | 76,4 | 11,3 | 472 | 0,88 |
| B2 | 111,6 | 143,5 | 182,4 | 18,5 | 426 | 0,78 |
| B3 | 111,6 | 104,6 | 179,9 | 29,6 | 380 | 0,68 |

* aus $^1$H-NMR-Spektrum

"mequ" bedeutet Milliequivalent; d.h. "mequ c=c/100g" bedeutet mMol -C=C- pro 100 g Verbindung (B).

Hexadien wird pro 100 g mit ca. 1 mg Platin in Form des unter II) beschriebenen Katalysators versetzt und unter Stickstoffatmosphäre auf ca. 50°C erwärmt. Man tropft das oben beschriebene H-Siloxan zu und läßt bei Rückflußtemperatur 3 Stunden nachreagieren. Überschüssiges Hexadien wird bei 80°C abdestilliert, das jeweils erhaltene Alkenylsiloxan im Vakuum bei 3 hPa von flüchtigen Bestandteilen befreit. Das Verhältnis von Monohydrosilylierung zu Dihydrosilylierung am 1,5-Hexadien C=C/SiCH ist aus den Daten des $^1$H-NMR-Spektrums berechnet und

in Tabelle 1 aufgeführt. Die so erhaltenen Alkenylsiloxane (B1) bis (B3) sind sämtlich in α,ω-Dihydrogenpolydimethylsiloxan mit einer Viskosität von 240 $mm^2/s$ klar löslich.

II) Platinkatalysator

1,3-Divinyl-1,1,3,3-tetramethyldisiloxankomplex von Platin gemäß US-A 3,775,452 verdünnt in α,ω-Divinyldimethylsiliconöl der Viskosität 1000 $mm^2/s$ auf einen Pt-Gehalt von 1,0 Gewichtsprozent.

Es werden

(A) Equilibrat aus Trimethylsiloxy-, Dimethylsiloxy- und Hydrogenmethylsiloxyeinheiten mit 0,047 Gewichtsprozent Si-gebundenem Wasserstoff, bezogen auf das Gesamtgewicht von (A), und einer Viskosität von 110 $mm^2/s$,
(B) Alkenylsiloxan (B3), dessen Herstellung oben unter I) beschrieben ist,
(C) Equilibrat aus Trimethylsiloxy- und Hydrogenmethylsiloxyeinheiten mit einer Viskosität von 21 $mm^2/s$,
(D) der oben unter II) beschriebene Platinkatalysator und
(E) 1-Ethinylcyclohexanol

nacheinander und in der in Tabelle 2 angegebenen Menge gemischt und mit einem Glasstab auf saugarmes Pergaminpapier gerakelt. Die anschließende Aushärtung erfolgt im Umluftofen bei 100°C Lufttemperatur.

Tabelle 2

| Komponente | Rezeptur 1 | Rezeptur 2 | Vergleichsrezeptur V1 |
|---|---|---|---|
| (A) | 53,1 g | 85,1 g | 106,4 g |
| (C) | 1,7 g | 0,7 g | - |
| (E) | 170 mg | 240 mg | 290 mg |
| (B) | 15,8 g | 15,8 g | 15,8 g |
| (D) | 0,7 g | 1,0 g | 1,2 g |

Das Molverhältnis von Hexenylgruppen aus (B) zur Gesamtmenge des Si-gebundenen Wasserstoffs aus (A) + (C) beträgt bei den erfindungsgemäßen Rezepturen 1 und 2 jeweils 1,2.

Die erfindungsgemäßen Rezepturen 1 und 2 sowie die Vergleichsrezeptur 1 enthalten jeweils 0,24 Gew.-% (E) und 100 ppm Pt, bezogen auf das Gesamtgewicht der einzelnen Rezeptur.

Angaben über die Vulkanisation und Filmeigenschaften der erhaltenen Überzüge finden sich in Tabelle 3.

Tabelle 3

| Rezeptur | Aushärtung | Oberfläche | Abrieb | Topfzeit |
|---|---|---|---|---|
| 1 | 5 Minuten bei 100°C | klebfrei | nein | >4 Tage |
| 2 | 5 Minuten bei 100°C | klebfrei | nein | >4 Tage |
| V1 | 5 Minuten bei 100°C | klebfrei | stark | >4 Tage |

Das Vergleichsbeispiel V1 zeigt, daß ohne Zusatz von Komponente (C) keine ausreichende Filmverankerung auf der beschichteten Oberfläche erzielt wird, obwohl eine sehr lange Vulkanisation gewählt wurde.

**Beispiel 2**

Es werden

(A) Equilibrat aus Hydrogendimethylsiloxy- und Dimethylsiloxyeinheiten mit 0,02 Gewichtsprozent Si-gebundenem Wasserstoff, bezogen auf das Gesamtgewicht von (A), und einer Viskosität von 240 $mm^2/s$,

(B) Alkenylsiloxan (B2), dessen Herstellung in Beispiel 1 unter I) beschrieben ist,

(C) Equilibrat aus Trimethylsiloxy- und Hydrogenmethylsiloxyeinheiten mit einer Viskosität von 21 $mm^2/s$,

(D) der in Beispiel 1 unter II) beschriebene Platinkatalysator und

(E) 1-Ethinylcyclohexanol

nacheinander und in der in Tabelle 4 angegebenen Menge gemischt und mit einem Glasstab auf saugarmes Pergaminpapier gerakelt. Die anschließende Aushärtung erfolgt im Umluftofen bei 150°C Lufttemperatur.

Tabelle 4

| Komponente | Rezeptur 3 | Vergleichsrezeptur V2 |
|---|---|---|
| (A) | 188 g | 250 g |
| (C) | 0,8 g | - |
| (E) | 200 mg | 260 mg |
| (B) | 14 g | 14 g |
| (D) | 2,0 g | 2,6 g |

Die erfindungsgemäße Rezeptur 3 und die Vergleichsrezeptur 2 enthalten jeweils 0,10 Gew.-% (E), bezogen auf das Gesamtgewicht der einzelnen Rezeptur.

Angaben über die Vulkanisation und Filmeigenschaften der erhaltenen Überzüge finden sich in Tabelle 5.

Tabelle 5

| Rezeptur | Aushärtung | Oberfläche | Abrieb | Topfzeit |
|---|---|---|---|---|
| 3 | 2 Sekunden bei 150°C | klebfrei | nein | >24 Stunden |
| 3 | 1 Sekunden bei 150°C | klebfrei | nein | >24 Stunden |
| 3[1)] | 2 Sekunden bei 150°C | klebfrei | nein | >24 Stunden |
| V2 | 2 Sekunden bei 150°C | klebfrei | stark | >24 Stunden |

1) Rezeptur 3 nach vier Stunden Lagerung.

Das Vergleichsbeispiel V2 zeigt, daß ohne Zusatz von Komponente (C) keine ausreichende Filmverankerung auf der beschichteten Oberfläche erzielt wird.

**Beispiel 3**

III) Platinkatalysator

1,3-Divinyl-1,1,3,3-tetramethyldisiloxankomplex von Platin gemäß US-A 3,775,452 verdünnt in $\alpha,\omega$-Divinyldimethylsiliconöl der Viskosität 1000 $mm^2/s$ auf einen Pt-Gehalt von 27,0 Gewichtsprozent.

Aus den in Beispiel 2 beschriebenen Komponenten (A), (B), (C) und (E) sowie dem oben unter III) charakterisierten Platinkatalysator als Komponente (D') werden die Mischung R und die Mischung S mit der jeweils in Tabelle 6 angegebenen Menge der einzelnen Komponenten hergestellt.

Tabelle 6

| Komponente | Mischung R | Mischung S |
|---|---|---|
| (A) | 188,0 g | - |
| (B) | - | 15,2 g |
| (C) | 0,8 g | - |
| (D') | - | 75 mg |
| (E) | 0,2 g | - |

Eine gebrauchsfertige Formulierung läßt sich durch Einrühren von einem Gewichtsteil der Mischung S in 12,3 Gewichtsteile der Mischung R herstellen.

Formulierung a): Die Mischungen R und S werden sofort nach deren Herstellung zusammengegeben.

Formulierung b): Die Mischungen R und S werden zuerst für eine Dauer von 170 Stunden bei 70°C gelagert und anschließend zusammengegeben.

Formulierung c): Formulierung a) nach einer Lagerung von 4 Stunden bei 25°C.

Die einzelnen Formulierungen a)-c) werden jeweils mit einem Glasstab auf saugarmes Pergaminpapier gerakelt. Die anschließende Aushärtung erfolgt im Umluftofen bei 150°C Lufttemperatur.

Angaben über die Vulkanisation und Filmeigenschaften der erhaltenen Überzüge finden sich in Tabelle 7.

Tabelle 7

| Rezeptur | Aushärtung | Oberfläche | Abrieb |
|---|---|---|---|
| a) | 1 Sekunde bei 150°C | klebfrei | nein |
| b) | 1 Sekunde bei 150°C | klebfrei | nein |
| c) | 1 Sekunde bei 150°C | klebfrei | nein |

## Patentansprüche

1. Zusammensetzungen, die

   (A) polymere Organosiliciumverbindung mit pro Molekül 1 bis 6 Si-gebundenen Wasserstoffatomen, wobei diese Si-gebundenen Wasserstoffatome einen Anteil von 0,001 bis 0,100 Gewichtsprozent, bezogen auf das Gesamtgewicht der Organosiliciumverbindung (A), haben,
   (B) polymere Organosiliciumverbindung mit pro Molekül mindestens drei Gruppen $R^2$ der Formel

   $$-R-(CH=CH_2)_{x-1}$$

   mit R gleich zweiwertigem, dreiwertigem oder vierwertigem Kohlenwasserstoffrest mit 1 bis 12 Kohlenstoffatomen, die gegebenenfalls durch 1 bis 4 Sauerstoffatome durchbrochen sein können, und
   x gleich der Wertigkeit von Rest R entsprechend 2, 3 oder 4,
   wobei die Viskosität der Organosiliciumverbindung (B) bei 25°C maximal 200 $mm^2/s$ beträgt,

   (C) polymere Organosiliciumverbindung mit pro Molekül durchschnittlich mindestens 10 Si-gebundenen Wasserstoffatomen, wobei diese Si-gebundenen Wasserstoffatome einen Anteil von 0,4 bis 1,7 Gewichtsprozent, bezogen auf das Gesamtgewicht der Organosiliciumverbindung (C), haben,
   (D) die Anlagerung von Si-gebundenem Wasserstoff an aliphatische Doppelbindung fördernder Katalysator

   sowie gegebenenfalls

   (E) Inhibitor

   enthalten, mit der Maßgabe, daß

   - in der Zusammensetzung das Molverhältnis der gesamten Si-gebundenen Wasserstoffatome zu den gesamten Alkenylgruppen $-CH=CH_2$ durchschnittlich kleiner 1 ist,

   - die Zusammensetzung Organosiliciumverbindung (B) in einer solchen Menge enthält, daß die Zusammensetzung pro Si-gebundenem Wasserstoffatom der Komponente (A) durchschnittlich mindestens 1,1 Alkenylreste $-CH=CH_2$ der Komponente (B) enthält

   - und der Anteil der Si-gebundenen Wasserstoffatome der Organosiliciumverbindung (C) 5 bis 50 %, bezogen auf die Anzahl der gesamten in der Zusammensetzung vorhandenen Si-gebundenen Wasserstoffatome, beträgt.

2. Zusammensetzungen gemäß Anspruch 1, dadurch gekennzeichnet, daß es sich bei Organosiliciumverbindungen (A) um solche aus Einheiten der allgemeinen Formel

   $$H_eR^1_fSiO_{\frac{4-e-f}{2}} \qquad (I)$$

   handelt, wobei

   $R^1$ gleich oder verschieden sein kann und SiC-gebundene, gegebenenfalls halogenierte Kohlenwasserstoffreste mit 1 bis 18 Kohlenstoffatomen bedeutet,
   e 0 oder 1, durchnittlich 0,001 bis 0,1,

f  0, 1, 2 oder 3, durchschnittlich 1,0 bis 2,0, und die Summe e+f nicht größer als 3 ist,

mit der Maßgabe, daß die Organosiliciumverbindung (A) 1 bis 6 Si-gebundene Wasserstoffatome aufweist und diese einen Anteil von 0,001 bis 0,100 Gewichtsprozent, bezogen auf das Gesamtgewicht der Organosiliciumverbindung (A), haben.

**3.** Zusammensetzungen gemäß Anspruch 1 oder 2, dadurch gekennzeichnet, daß es sich bei Organosiliciumverbindungen (A) um Organopolysiloxane der Formel

$$H_dR^1{}_{3-d}SiO(SiR^1{}_2O)_o(SiHR^1O)_pSiR^1{}_{3-d}H_d \qquad (II)$$

handelt, wobei

$R^1$  gleich oder verschieden sein kann und SiC-gebundene, gegebenenfalls halogenierte Kohlenwasserstoffreste mit 1 bis 18 Kohlenstoffatomen bedeutet,
d  gleich oder verschieden sein kann und 0 oder 1 ist,
o  eine ganze Zahl von 10 bis 1000 ist und
p  0 oder eine ganze Zahl von 1 bis 6 bedeutet,

mit der Maßgabe, daß die Organosiliciumverbindung (A) pro Molekül 1 bis 6 Si-gebundene Wasserstoffatome aufweist und diese einen Anteil von 0,001 bis 0,100 Gewichtsprozent, bezogen auf das Gesamtgewicht der Organosiliciumverbindung (A), haben.

**4.** Zusammensetzungen gemäß einem oder mehreren der Ansprüche 1 bis 3, dadurch gekennzeichnet, daß Organosiliciumverbindungen (B) pro Molekül mindestens 3 Alkenylgruppen $-CH=CH_2$ aufweisen.

**5.** Zusammensetzungen gemäß einem oder mehreren der Ansprüche 1 bis 4, dadurch gekennzeichnet, daß der Anteil der Gruppen $R^2$ der Formel $-R-(CH=CH_2)_{x-1}$ mit R und x gleich der im Anspruch 1 genannten Bedeutung in der Organosiliciumverbindung (B) bei mehr als 10 %, bezogen auf die Anzahl aller SiC-gebundenen Reste, liegt.

**6.** Zusammensetzungen gemäß einem oder mehreren der Ansprüche 1 bis 5, dadurch gekennzeichnet, daß sie Komponente (B) in Mengen von 1 bis 25 Gewichtsteilen, je 100 Gewichtsteile eingesetzter Organosiliciumverbindung (A), enthalten.

**7.** Zusammensetzungen gemäß einem oder mehreren der Ansprüche 1 bis 6, dadurch gekennzeichnet, daß es sich bei Organosiliciumverbindung (C) um solche aus Einheiten der allgemeinen Formel

$$H_8R^4{}_hSiO_{\frac{4-g-h}{2}} \qquad (V)$$

handelt, wobei

$R^4$  gleich oder verschieden sein kann und eine für $R^1$ angegebene Bedeutung hat,
g  0 oder 1, durchschnittlich 0,2 bis 1,0,
h  0, 1, 2 oder 3, durchschnittlich 1,0 bis 1,8, und

die Summe g+h nicht größer als 3 ist,
mit der Maßgabe, daß die Organosiliciumverbindung (C) mindestens 10 Si-gebundene Wasserstoffatome aufweist und diese einen Anteil von 0,4 bis 1,7 Gewichtsprozent, bezogen auf das Gesamtgewicht der Organosiliciumverbindung (C), haben.

**8.** Zusammensetzungen gemäß einem oder mehreren der Ansprüche 1 bis 7, dadurch gekennzeichnet, daß es sich bei den Organosiliciumverbindungen (C) um Organopolysiloxane der Formel

$$H_iR^4{}_{3-i}SiO(SiR^4{}_2O)_k(SiHR^4O)_lSiR^4{}_{3-i}H_i \qquad (VI)$$

handelt, wobei

$R^4$  gleich oder verschieden sein kann und eine im Anspruch 2 für $R^1$ angegebene Bedeutung hat,
i  gleich oder verschieden sein kann und 0 oder 1 ist,

k 0 oder eine ganze Zahl von 1 bis 50 ist und
l eine ganze Zahl von 10 bis 60 bedeutet, wobei die Summe aus k und 1 nicht größer als 70 ist.

**9.** Zusammensetzungen gemäß einem oder mehreren der Ansprüche 1 bis 8, dadurch gekennzeichnet, daß Inhibitor (E) vorhanden ist.

**10.** Verwendung der Zusammensetzungen gemäß Ansprüche 1 bis 9 zur Herstellung von klebrige Stoffe abweisenden Überzügen.

## Claims

**1.** Compositions which comprise

(A) a polymeric organosilicon compound having, per molecule, 1 to 6 Si-bonded hydrogen atoms, these Si-bonded hydrogen atoms being present in a proportion of 0.001 to 0.100 per cent by weight, based on the total weight of the organosilicon compound (A),
(B) a polymeric organosilicon compound having, per molecule, at least three groups $R^2$ of the formula

$$-R-(CH=CH_2)_{x-1}$$

where R is a divalent, trivalent or tetravalent hydrocarbon radical having 1 to 12 carbon atoms, which can optionally be interrupted by 1 to 4 oxygen atoms, and
x is, according to the meaning of the radical R, 2, 3 or 4,
the viscosity of the organosilicon compound (B) at 25°C being not more than 200 $mm^2/s$,

(C) a polymeric organosilicon compound having, per molecule, on average at least 10 Si-bonded hydrogen atoms, these Si-bonded hydrogen atoms being present in a proportion of 0.4 to 1.7 per cent by weight, based on the total weight of the organosilicon compound (C),
(D) a catalyst which promotes the addition of Si-bonded hydrogen onto an aliphatic double bond

and, if appropriate,

(E) an inhibitor,

with the proviso that

- the molar ratio of all the Si-bonded hydrogen atoms to all the alkenyl groups $-CH=CH_2$ in the composition is on average less than 1,
- the composition comprises an organosilicon compound (B) in an amount such that the composition contains, per Si-bonded hydrogen atom of component (A), on average at least 1.1 alkenyl radicals $-CH=CH_2$ of component (B)
- and the content of Si-bonded hydrogen atoms of the organosilicon compound (C) is 5 to 50%, based on the number of all the Si-bonded hydrogen atoms present in the composition.

**2.** Compositions according to Claim 1, characterized in that the organosilicon compounds (A) are those of units of the general formula

$$H_eR^1_fSiO_{\frac{4-e-f}{2}} \quad (I),$$

in which

$R^1$ can be identical or different and is SiC-bonded, optionally halogenated hydrocarbon radicals having 1 to 18 carbon atoms,
e is 0 or 1, on average 0.001 to 0.1,
f is 0, 1, 2 or 3, on average 1.0 to 2.0, and the sum e+f is not greater than 3,

with the proviso that the organosilicon compound (A) contains 1 to 6 Si-bonded hydrogen atoms and these are

present in a proportion of 0.001 to 0.100 per cent by weight, based on the total weight of the organosilicon compound (A).

**3.** Compositions according to Claim 1 or 2, characterized in that the organosilicon compounds (A) are organopolysiloxanes of the formula

$$H_dR^1{}_{3-d}SiO(SiR^1{}_2O)_o(SiHR^1O)_pSiR^1{}_{3-d}H_d \quad (II),$$

in which

$R^1$ can be identical or different and is SiC-bonded, optionally halogenated hydrocarbon radicals having 1 to 18 carbon atoms,
d can be identical or different and is 0 or 1,
o is an integer from 10 to 1000 and
p is 0 or an integer from 1 to 6,

with the proviso that the organosilicon compound (A) contains, per molecule, 1 to 6 Si-bonded hydrogen atoms and these are present in a proportion of 0.001 to 0.100 per cent by weight, based on the total weight of the organosilicon compound (A).

**4.** Compositions according to one or more of Claims 1 to 3, characterized in that the organosilicon compounds (B) contain, per molecule, at least 3 alkenyl groups $-CH=CH_2$.

**5.** Compositions according to one or more of Claims 1 to 4, characterized in that the content of groups $R^2$ of the formula $-R-(CH=CH_2)_{x-1}$, where R and x have the meanings given in Claim 1, in the organosilicon compound (B) is more than 10%, based on the number of all SiC-bonded radicals.

**6.** Compositions according to one or more of Claims 1 to 5, characterized in that they comprise component (B) in amounts of 1 to 25 parts by weight per 100 parts by weight of organosilicon compound (A) employed.

**7.** Compositions according to one or more of Claims 1 to 6, characterized in that the organosilicon compound (C) is one comprising units of the general formula

$$H_gR^4{}_hSiO_{\frac{4-g-h}{2}} \quad (V),$$

in which

$R^4$ can be identical or different and has one of the meanings given for $R^1$,
g is 0 or 1, on average 0.2 to 1.0,
h is 0, 1, 2 or 3, on average 1.0 to 1.8, and the sum g+h is not greater than 3,

with the proviso that the organosilicon compound (C) contains at least 10 Si-bonded hydrogen atoms and these are present in a proportion of 0.4 to 1.7 per cent by weight, based on the total weight of the organosilicon compound (C).

**8.** Compositions according to one or more of Claims 1 to 7, characterized in that the organosilicon compounds (C) are organopolysiloxanes of the formula

$$H_iR^4{}_{3-i}SiO(SiR^4{}_2O)_k(SiHR^4O)_lSiR^4{}_{3-i}H_i \quad (VI),$$

in which

$R^4$ can be identical or different and has the meaning given for $R^1$ in Claim 2,
i can be identical or different and is 0 or 1,
k is 0 or an integer from 1 to 50 and
l is an integer from 10 to 60, the sum of k and l being not greater than 70.

**9.** Compositions according to one or more of Claims 1 to 8, characterized in that inhibitor (E) is present.

**10.** Use of the compositions according to Claims 1 to 9 for the production of non-stick coatings.

## Revendications

**1.** Compositions qui contiennent

(A) un composé organosilicié polymère avec, par molécule, 1 à 6 atomes d'hydrogène à liaison Si, où ces atomes d'hydrogène à liaison Si participent pour 0,001 à 0,100% en poids, sur base du poids total du composé organosilicié (A),
(B) un composé organosilicié polymère avec, par molécule, au moins trois groupes $R^2$ de formule

$$-R-(CH=CH_2)_{x-1}$$

avec R égal à un radical hydrocarbure bivalent, trivalent ou tétravalent, avec 1 à 12 atomes de carbone, qui peut être facultativement interrompu par 1 à 4 atomes d'oxygène, et
x égal à la valence du radical R, correspondant à 2, 3 ou 4,
où la viscosité du composé organosilicié (B) atteint au maximum 200 $mm^2/s$ à 25°C,

(C) un composé organosilicié polymère avec, par molécule, en moyenne au moins 10 atomes d'hydrogène à liaison Si, où ces atomes d'hydrogène à liaison Si participent pour 0,4 à 1,7% en poids, sur base du poids total du composé organosilicié (C),
(D) un catalyseur activant l'addition d'hydrogène à liaison Si sur une double liaison aliphatique,

ainsi que facultativement

(E) un inhibiteur,

avec la condition que

- dans la composition, le rapport molaire du total des atomes d'hydrogène à liaison Si au total des groupes alcényle $-CH=CH_2$ est en moyenne inférieur à 1,
- la composition contient le composé organosilicié (B) en une quantité telle que la composition contient en moyenne moins de 1,1 radical alcényle $-CH=CH_2$ du composant (B) par atome d'hydrogène à liaison Si du composant (A),
- et la quantité d'atomes d'hydrogène à liaison Si du composé organosilicié (C) atteint 5 à 50%, sur base du nombre total des atomes d'hydrogène à liaison Si présents dans la composition.

**2.** Compositions suivant la revendication 1, caractérisées en ce que les composés organosiliciés (A) consistent en les composés constitués d'unités de formule générale

$$H_eR^1{}_fSiO_{(4-e-f)/2} \quad (I)$$

où

$R^1$ peut être identique ou différent et représente un radical hydrocarbure à liaison Si, facultativement halogéné, avec 1 à 18 atomes de carbone
e est 0 ou 1, en moyenne 0,001 à 0,1,
f est 0, 1, 2 ou 3, en moyenne 1,0 à 2,0, et
la somme e+f n'est pas supérieure à 3,

avec la condition que le composé organosilicié (A) présente 1 à 6 atomes d'hydrogène à liaison Si et ceux-ci participent pour 0,001 à 0,100% en poids, sur base du poids total du composé organosilicié (A).

**3.** Compositions suivant la revendication 1 ou 2, caractérisées en ce que les composés organosiliciés (A) consistent en les organopolysiloxanes de formule

$$H_dR^1{}_{3-d}SiO(SiR^1{}_2O)_o(SiHR^1O)_pSiR^1{}_{3-d}H_d \quad (II)$$

où

$R^1$ peut être identique ou différent et représente un radical hydrocarbure à liaison Si, facultativement halogéné, avec 1 à 18 atomes de carbone
d peut être identique ou différent et est 0 ou 1,
o est un nombre entier de 10 à 1000, et
p représente 0 ou un nombre entier de 1 à 6,

avec la condition que le composé organosilicié (A) présente 1 à 6 atomes d'hydrogène à liaison Si par molécule, et ceux-ci participent pour 0,001 à 0,100% en poids, sur base du poids total du composé organosilicié (A).

**4.** Compositions suivant l'une ou plusieurs des revendications 1 à 3, caractérisées en ce que le composé organosilicié (B) présente au moins 3 groupes alcényle $-CH{=}CH_2$ par molécule.

**5.** Compositions suivant l'une ou plusieurs des revendications 1 à 4, caractérisées en ce que la quantité de groupes $R^2$ de formule $-R-(CH{=}CH_2)_{x-1}$ avec R et x valant la signification citée à la revendication 1, se situe à plus de 10% dans le composé organosilicié (B), sur base du nombre de tous les radicaux à liaison Si.

**6.** Compositions suivant l'une ou plusieurs des revendications 1 à 5, caractérisées en ce qu'elles contiennent les composants (B) en des quantités de 1 à 25 parties en poids, par 100 parties en poids du composé organosilicié (A) introduit.

**7.** Compositions suivant l'une ou plusieurs des revendications 1 à 6, caractérisées en ce que le composé organosilicié (C) consiste en un composé constitué d'unités de formule générale

$$H_gR^4{}_hSiO_{(4-g-h)/2} \qquad (V)$$

où

$R^4$ peut être identique ou différent et a la signification donnée pour $R^1$,
g est 0 ou 1, en moyenne 0,2 à 1,0,
h est 0, 1, 2 ou 3, en moyenne 1,0 à 1,8, et
la somme g+h n'est pas supérieure à 3,

avec la condition que le composé organosilicié (C) présente au moins 10 atomes d'hydrogène à liaison Si et ceux-ci participent pour 0,4 à 1,7% en poids, sur base du poids total du composé organosilicié (C).

**8.** Compositions suivant l'une ou plusieurs des revendications 1 à 7, caractérisées en ce que les composés organosiliciés (C) consistent en les organopolysiloxanes de formule

$$H_iR^4{}_{3-i}SiO(SiR^4{}_2O)_k(SiHR^4O)_lSiR^4{}_{3-i}H_i \qquad (VI)$$

où

$R^4$ peut être identique ou différent et a une signification donnée pour $R^1$ à la revendication 2,
i peut être identique ou différent et est 0 ou 1,
k est 0 ou un nombre entier de 1 à 50, et
l représente un nombre entier de 10 à 60, où la somme de k et de l n'est pas supérieure à 70.

**9.** Compositions suivant l'une ou plusieurs des revendications 1 à 8, caractérisées en ce que l'inhibiteur (E) est présent.

**10.** Utilisation des compositions suivant les revendications 1 à 9, pour préparer des revêtements antiadhésifs.